(19) **Europäisches Patentamt / European Patent Office / Office européen des brevets**

(11) **EP 2 973 897 B1**

(12) **EUROPEAN PATENT SPECIFICATION**

(45) Date of publication and mention of the grant of the patent:
**11.09.2019 Bulletin 2019/37**

(21) Application number: **14768972.3**

(22) Date of filing: **13.03.2014**

(51) Int Cl.:
**H01S 3/109** (2006.01)

(86) International application number:
**PCT/US2014/026617**

(87) International publication number:
**WO 2014/151887 (25.09.2014 Gazette 2014/39)**

(54) **HIGHLY EFFICIENT, SINGLE-PASS, HARMONIC GENERATOR WITH ROUND OUTPUT BEAM**

HOCHEFFIZIENTER EINGÄNGIGER OBERWELLENGENERATOR MIT RUNDEM AUSGANGSSTRAHL

GÉNÉRATEUR D'HARMONIQUE À SIMPLE PASSAGE TRÈS EFFICACE DOTÉ D'UN FAISCEAU DE SORTIE ROND

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2013 US 201361783686 P**

(43) Date of publication of application:
**20.01.2016 Bulletin 2016/03**

(73) Proprietor: **IPG Photonics Corporation
Oxford, Massachusetts 01540 (US)**

(72) Inventors:
• **LEONARDO, Manuel J.
San Francisco, California 94114 (US)**
• **ARBORE, Mark A.
Los Altos, California 94022 (US)**

• **KEATON, Gregory L.
San Francisco, California 94114 (US)**

(74) Representative: **Kobiako von Gamm, Iouri
Kobiako-von Gamm
Patent- und Rechtsanwaltskanzlei
PartG mbB
Bruckmannstraße 13
80638 München (DE)**

(56) References cited:
**WO-A1-2006/060160      WO-A1-2006/060160
WO-A2-2011/123254      JP-A- 2011 197 432
JP-A- 2011 197 432      US-A- 5 850 407
US-A1- 2006 250 677      US-A1- 2011 243 163**

**Description**

FIELD OF THE INVENTION

This invention is related nonlinear optics and more particularly to a harmonic generator system that produces a rounded output beam.

BACKGROUND OF THE INVENTION

Wavelength-converted laser systems often use nonlinear optical crystals, such as lithium borate (LBO) to generate a visible wavelength output beam from an infrared input beam generated by a source laser. In second harmonic generation (SHG), for example, a non-linear process taking place in the crystal combines two photons of infrared input radiation to produce a photon of visible output radiation having twice the frequency of the input infrared radiation. In third harmonic generation (THG), second harmonic generation is combined with an additional nonlinear optical crystal that is phase matched to combine a photon of the SHG output with a photon of the infrared input to produce third harmonic generation (THG) output having three times the frequency of the infrared input radiation.

Nonlinear crystals such as LBO are often characterized by an anisotropic refractive index, and this has an effect on the shape of the wavelength-converted output beam. An anisotropic refractive index means that the index of refraction depends on the direction of propagation and polarization of radiation in the crystal. If an unpolarized beam is launched into such a crystal, it will typically exhibit double refraction: the beam will split into two polarized beams that are not collinear but whose directions of propagation differ by an angle called the walk-off angle.

When a crystal with an anisotropic refractive index such as LBO is used for second harmonic generation, there will be walk-off among the beams. Either the output beam travels at a walk-off angle with respect to the input beam, or else the input beam itself undergoes double refraction, breaking up into two beams, one of which propagates at the walk-off angle. Because of the walk-off, the output beam is distorted and ends up with a different shape than the input beam. Typically the input beam is circular, and the output beam is elliptical.

A commercially viable third harmonic system would preferably have all or most of the following attributes. Such a system would be reliable and offer thousands of hours of hands-off operation. Output parameters, such as mode quality, beam pointing, and beam position would remain constant or nearly constant over long periods of time. The third harmonic beam produced by such a system would be round. The beam would have minimal asymmetry, e.g., less than about 15%. The beam would have minimal astigmatism, typically < 20% of the Rayleigh length. The beam would approximate a diffraction limited Gaussian beam, typically $M^2 < 1.3$. The output beam would be spectrally pure, that is residual fundamental and second harmonic light would be <1% of the third harmonic power. The system would convert fundamental radiation to third harmonic with an efficiency greater than about 30%, preferably greater than about 40%. The optical layout for third harmonic generation would also be easily optimized and contain relatively simple optical components. The system would flexibly operate over a wide operating range of pulse repetition frequencies and pulse widths.

It would also be desirable for the third harmonic output to be high power, with at least moderate energy pulses to efficiently process high volumes of material. For example, average power would be greater than 1 W, and preferably greater than 10 W with the potential to scale to higher power. The pulse energy would be greater than about 1 microjoule ($\mu$J), preferably greater than 10 $\mu$J with potential to scale to higher pulse energies.

Presently, there is no existing solution that would fulfill all these commercial requirements forcing customers make compromises and limiting the application of third harmonic systems.

Much of the prior art on third harmonic generation deals with intra-cavity systems. In an intra-cavity system, the third harmonic generation takes place within a resonator cavity defined by two reflective surfaces. An optical gain medium for the laser system is located within the cavity along with one or more non-linear optical crystals. The optical gain medium produces the fundamental radiation that undergoes frequency conversion in the non-linear optical crystals.

U.S. Patent Number 5,850,407 to William Grossman discloses a type-I second harmonic generation (SHG) crystal followed by type-II third harmonic generation (THG) crystal within a laser cavity. This reference describes intracavity generation of third harmonic using a Lithium Borate (LBO) nonlinear crystal fabricated so that the output face is exactly at Brewster angle with respect to the fundamental and third harmonic beam. In this system, the output face must be at Brewster angle for the fundamental beam since otherwise the fundamental cavity would encounter additional losses. The Brewster surface provides three functions. First, it provides for wavelength separation of fundamental, second harmonic, and third harmonic beams from dispersion on the angled interface. Second, it provides for near-zero loss for IR and UV light. Third it is a high damage-threshold surface. Unfortunately, system in U.S. Patent Number 5,850,407 requires an elliptical input beam and does not provide high single-pass conversion efficiency. Low single-pass conversion efficiency is not a problem in Q-switched intracavity harmonic generation since the fundamental beam is recirculated in the resonator cavity. Furthermore, since it only works efficiently intracavity, the system is not flexible since Q-switched lasers only operate over a narrow range of operating parameters.

It is noted that for a very large & round input fundamental beam, and in the low-efficiency limit, a Brewster-Brewster design (i.e., one in which both the input and output faces of non-linear crystal are Brewster angle faces) generates a round UV beam. This is essentially the operating point for the system described in the 5,850,407 patent. While a Brewster-Brewster design is useful in intra-cavity tripled systems, the single pass conversion efficiency is too low for extra-cavity harmonic generation.

Another example is described in U.S. Patent Number 7,016,389. This patent discusses fabricating a wedge on the exit surface of the third harmonic crystal, which is generally smaller than the Brewster angle. Again this design is for an intracavity harmonic generation system. Extra-cavity designs require tighter focusing of the input beam in the nonlinear crystals than intracavity designs for efficient harmonic generation.

U.S. Patent Number 7,170,911 describes an extra-cavity third harmonic nonlinear crystal fabricated with a Brewster angled output face. Alternatively such a system may be fabricated with coatings suitable to reduce reflections at normal or near-normal incidence output face. However, it is undesirable to put such coatings on a surface that receives a significant flux of ultraviolet radiation.

US 2011/243163 A1 discloses an extra cavity harmonic generator system with consecutive SHG and THG crystals.

It is within this context that embodiments of the present invention arise.

SUMMARY

The present invention is defined by claims 1-9.

This concept may be extended to harmonic generator systems involving generation of higher order harmonic radiation, e.g., fourth harmonic or higher.

BRIEF DESCRIPTION OF THE DRAWINGS

The teachings of the present invention can be readily understood by considering the following detailed description in conjunction with the accompanying drawings, in which:

FIG. 1 is a schematic diagram depicting a basic prior art optical layout for third harmonic generation.

FIG. 2A is a schematic diagram of an optical layout for third harmonic generation in accordance with aspects of the present disclosure.

FIG. 2B is a schematic diagram of an alternative optical layout for third harmonic generation in accordance with aspects of the present disclosure.

FIG. 3 is a graph of expansion ratio as a function of angle of incidence for a material with a refractive index of 1.6 (typical of LBO).

FIG. 4 is a graph of reflection loss for "p" and "s" polarization as a function of angle of incidence for an uncoated surface with an initial refractive index of 1 (air) and a final refractive index of 1.6 (typical of LBO).

FIG. 5 is a graph of minimum internal angle on the THG crystal output face to provide angular separation between the fundamental, second harmonic, and third harmonic greater than the beam divergence.

FIG. 6 is a schematic diagram of a wavelength converted laser system according to an aspect of the present disclosure.

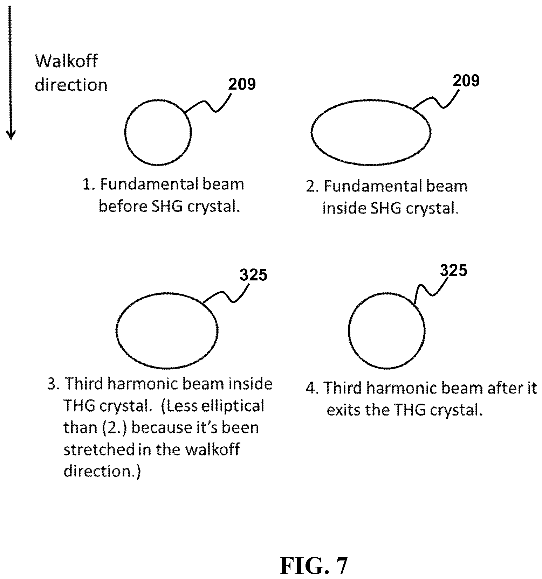

FIG. 7 is a schematic diagram illustrating cross-sectional beam shapes at different places in a third harmonic generation system according to aspects of the present disclosure.

DESCRIPTION OF THE SPECIFIC EMBODIMENTS

**GLOSSARY:**

As used herein:
Astigmatism refers to an optical aberration in which rays that propagate through an optical system in two perpendicular planes have different foci. An astigmatic beam comes to a waist in the x-direction in a different location than the waist in the y-direction. (The term "waist" is defined below.) If a light beam has its x-waist radius $w_{0x}$ at location $Z_x$, and y-waist radius $w_{0y}$ at location $Z_y$, then the astigmatism A is defined as the difference between the waist locations, divided by the average Rayleigh range of the waists:

$$A = \frac{Z_x - Z_y}{\overline{Z}_R}$$

where $\overline{Z}_R$ is the average Rayleigh range:

$$\overline{Z}_R = \frac{1}{2}\left\{ \frac{\pi w_{0x}^2}{\lambda} + \frac{\pi w_{0y}^2}{\lambda} \right\}.$$

Beam splitter refers to an optical device capable of splitting a beam of light into two or more parts.

Cavity or Optically Resonant Cavity refers to an optical path defined by two or more reflecting surfaces along which light can reciprocate or circulate. Objects that intersect the optical path are said to be within the cavity.

Continuous wave (CW) laser refers to a laser that emits radiation continuously rather than in short bursts, as in a pulsed laser.

Diode Laser refers to a light-emitting diode designed to use stimulated emission to generate a coherent light output. Diode lasers are also known as laser diodes or semiconductor lasers. Diode-Pumped Laser refers to a laser having a gain medium that is pumped by a diode laser. Gain refers to an increase in intensity, power, or pulse energy of a signal that is transmitted from one point to another through an amplifier. The term "unsaturated gain" refers to the increase of a small signal passing through the amplifier, which does not significantly change the inversion level in the amplifier. As used herein gain and unsaturated gain will be used interchangeably.

Gain Medium refers to a material capable of generating optical gain as described below with respect to a Laser.

Garnet refers to a particular class of oxide crystals, including e.g., yttrium aluminum garnet (YAG), gadolinium gallium garnet (GGG), gadolinium scandium gallium garnet (GSGG), yttrium scandium gallium garnet (YSGG) and similar.

Infrared Radiation refers to electromagnetic radiation characterized by a vacuum wavelength between about 700 nanometers (nm) and about 100,000 nm.

Laser is an acronym of light amplification by stimulated emission of radiation. A laser is a cavity that is contains a lasable material. This is any material -- crystal, glass, liquid, semiconductor, dye or gas -- the atoms of which are capable of being excited to a metastable state by pumping e.g., by light or an electric discharge. Light is emitted from the metastable state by the material as it drops back to the ground state. The light emission is stimulated by the presence by a passing photon, which causes the emitted photon to have the same phase and direction as the stimulating photon. The light (referred to herein as stimulated radiation) oscillates within the cavity, with a fraction ejected from the cavity to form an output beam.

Light: As used herein, the term "light" generally refers to electromagnetic radiation in a range of frequencies running from infrared through the ultraviolet, roughly corresponding to a range of vacuum wavelengths from about 1 nanometer ($10^{-9}$ meters) to about 100 microns.

$M^2$ is a measure of beam quality. Every beam of light has an associated $M^2$ that can be calculated from its waist radius $w_0$, its divergence half-angle $\theta$, and its wavelength $\lambda$. The value of $M^2$ is:

$$M^2 = \frac{\pi w_0 \theta}{\lambda}$$

A beam that has only one transverse mode i.e. that is perfectly Gaussian has $M^2 = 1$. Multi-mode beams have $M^2 > 1$. For a beam to be acceptably close to a pure Gaussian beam, typically one requires that $M^2 < 1.3$.

Non-linear effect refers to a class of optical phenomena that can typically be viewed only with nearly monochromatic, directional beams of light, such as those produced by a laser. Higher harmonic generation (e.g., second-, third-, and fourth-harmonic generation), optical parametric oscillation, sum-frequency generation, difference-frequency generation, optical parametric amplification, and the stimulated Raman Effect are examples of non-linear effects.

Nonlinear Optical Wavelength Conversion Processes are non-linear optical processes whereby input light of a given vacuum wavelength $\lambda_0$ passing through a non-linear medium interacts with the medium and/or other light passing through the medium in a way that produces output light having a different vacuum wavelength than the input light. Nonlinear wavelength conversion is equivalent to nonlinear frequency conversion, since the two values are related by the vacuum speed of light. Both terms may be used interchangeably. Nonlinear Optical Wavelength conversion includes:

Higher Harmonic Generation (HHG), e.g., second harmonic generation (SHG), third harmonic generation (THG), fourth harmonic generation (FHG), etc., wherein two or more photons of input light interact in a way that produces an output light photon having a frequency $Nf_0$, where N is the number of photons that interact. For example, in SHG, N=2.

Sum Frequency Generation (SFG), wherein an input light photon of frequency $f_1$ interacts with another input light photon of frequency $f_2$ in a way that produces an output light photon having a frequency $f_1+f_2$.

Difference Frequency Generation (DFG), wherein an input light photon of frequency $f_1$ interacts with another input light photon of frequency $f_2$ in a way that produces an output light photon having a frequency $f_1-f_2$.

Examples of non-linear crystals include, but are not limited to, lithium niobate ($LiNbO_3$), lithium triborate (LBO), beta-barium borate (BBO), cesium lithium borate (CLBO), lithium tantalite, stoichiometric lithium tantalite (SLT) potassium titanyl phosphate ($KTiOPO_4$ also known as KTP), ammonium dihydrogen arsenate (ADA), ammonium dihydrogen phosphate (ADP), cesium triborate ($CsB_3O_5$ or CBO), deuterated ammonium dihydrogen arsenate (DADA), deuterated ammonium dihydrogen phosphate (DADP), deuterated arginine phosphate (DLAP), rubidium di-deuterium phosphate ($RbD_2PO_4$ or DRDP, potassium aluminum borate (KABO), potassium dihydrogen arsenate (KDA), potassium dihydrogen phosphate (KDP), deuterated potassium dihydrogen phosphate ($KD_2PO_4$ or DKDP), $L_i2B_4O_7$ (LB4), or lithium formate monohydrate (LFM) and isomorphs thereof, periodically poled materials such as periodically poled lithium niobate (PPLN), periodically poled lithium tantalite and periodically poled stoichiometric lithium tantalite (PPSLT), and the like. Optical fiber can also be induced to have a non-linear response to optical radiation by fabricating microstructures in the fiber.

Optical amplifier refers to an apparatus that amplifies the power of an input optical signal. An optical amplifier is similar to a laser in that it uses a gain medium driven by pumping radiation. The amplifier generally lacks feedback (i.e. a cavity), so that it has gain but does not oscillate. As used herein an optical power amplifier generally refers to the last optical amplifier before delivery of an amplified beam to a target or a wavelength converter. An amplifier stage between a source of radiation and a power amplifier is generally referred to herein as a preamplifier.

Phase-matching refers to the technique used in a multiwave nonlinear optical process to enhance the distance over which the coherent transfer of energy between the waves is possible. For example, a three-wave process is said to be phase-matched when $k_1 + k_2 = k_3$, where $k_i$ is the wave vector of the $i^{th}$ wave participating in the process. In frequency doubling, e.g., the process is most efficient when the fundamental and the second harmonic phase velocities are matched. Typically the phase-matching condition is achieved by careful selection of the optical wavelength, polarization state, and propagation direction in the non-linear material.

Pulse Energy refers to the amount of energy in a pulse. Pulse energy may be calculated by integrating instantaneous pulse power over the pulse period.

Pulse Period (T) refers to the time between equivalent points of successive pulses in a train of two or more pulses.

Pulse Repetition Frequency (PRF) refers to the rate of repetition of pulses per unit time. The PRF is inversely related to the period T, e.g., PRF=1/T.

Q refers to the figure of merit of a resonator (cavity), defined as $(2\pi)$ x (average energy stored in the resonator)/(energy dissipated per cycle). The higher the reflectivity of the surfaces of an optical resonator and the lower the absorption losses, the higher the Q and the less energy loss from the desired mode.

Q-switch refers to a device used to rapidly change the Q of an optical resonator.

Q-switched Laser refers to a laser that uses a Q-switch in the laser cavity to prevent lasing action until a high level of inversion (optical gain and energy storage) is achieved in the lasing medium. When the switch rapidly increases the Q of the cavity, e.g., with acoustooptic or electro-optic modulators or saturable absorbers, a giant pulse is generated.

Quasi-CW refers to generating a succession of pulses at a high enough repetition rate to appear continuous.

Quasi Phase-matched (QPM) Material: In a quasi-phase-matched material, the fundamental and higher harmonic radiation are phase-matched by periodically changing the sign of the material's non-linear coefficient. The period of the sign change ($k_{QPM}$) adds an additional term to the phase matching equation such that $k_{QPM} + k_1 + k_2 = k_3$. In a QPM material, the fundamental and higher harmonic can have identical polarizations, often improving efficiency. Examples of quasi-phase-matched materials include periodically-poled lithium tantalate (PPLT), periodically-poled lithium niobate (PPLN), periodically poled stoichiometric lithium tantalate (PPSLT), periodically poled potassium titanyl phosphate (PPKTP) or periodically poled microstructured glass fiber.

Ultraviolet (UV) Radiation refers to electromagnetic radiation characterized by a vacuum wavelength shorter than that of the visible region, but longer than that of soft X-rays. Ultraviolet radiation may be subdivided into the following wavelength ranges: near UV, from about 380 nm to about 200 nm; far or vacuum UV (FUV or VUV), from about 200 nm to about 10 nm; and extreme UV (EUV or XUV), from about 1 nm to about 31 nm.

Vacuum Wavelength: The wavelength of electromagnetic radiation is generally a function of the medium in which the wave travels. The vacuum wavelength is the wavelength electromagnetic radiation of a given frequency would have if the radiation were propagating through a vacuum and is given by the speed of light in vacuum divided by the frequency.

Waist: As usual in Gaussian optics, the waist $w$ of a beam refers to the radius of that beam at its smallest point; i.e., at the focus. The radius of a beam is defined as the distance between the center of the beam and the point where the intensity falls to $1/e^2$ of the value at the center. When the beam is not round, one generally speaks of two waists, or waist radii, $w_x$ and $w_y$, obtained by fitting the beam to an elliptical Gaussian and extracting the $1/e^2$ distances along the major and minor axes. The diameter, or width, of a beam along a certain direction (say, along the x-axis) is twice the value of the waist: diameter = 2 $w$.

## Introduction

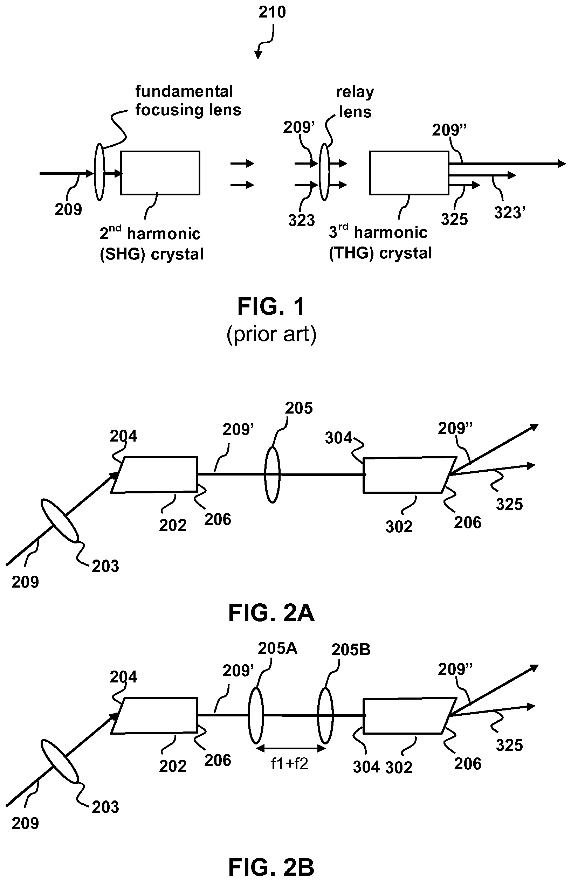

FIG. 1 shows a schematic of a typical optical set up used for third harmonic generation. A fundamental beam **209** passes through and is focused by a fundamental focusing lens **203**. A second harmonic (SH) crystal **202** is placed at or in the vicinity of the fundamental beam focus. The SH crystal **202** converts some fraction of the incident fundamental beam to the second harmonic. For example if the fundamental beam is at 1064 nm a properly fabricated and oriented second harmonic crystal may be LBO. The resultant second harmonic would have a wavelength of 532 nm. A residual fundamental beam **209'** and a second harmonic **323** beam emerge from the output face **206** of the SH crystal **202**. The emerging fundamental beam **209'** has a lower power than the incident fundamental beam **209,** since some of its power has been converted to the second harmonic beam **323**. The second harmonic beam **323** has a frequency equal to twice the optical frequency of the fundamental beam **209'**. It may be stated equivalently that second harmonic beam has a vacuum wavelength that is half the vacuum wavelength of the fundamental beam **209'**. Both beams pass through and are focused by a relay lens **205**.

A third harmonic (TH) crystal **302** is placed at or in the vicinity of the fundamental and second harmonic beam focus. The beams overlap, at least partially, in the TH crystal **302**. The TH crystal converts **302** the mixture of the fundamental beam **209'** and second harmonic beam **323** to a third harmonic beam **325**. The third harmonic beam **325** has an optical frequency equal to a sum of the frequency of the fundamental beam and the frequency of the second harmonic beam **323**. For example if the fundamental beam is at a vacuum wavelength of 1064 nm and the second harmonic beam is at a vacuum wavelength of 532 nm a properly fabricated and oriented third harmonic crystal may be LBO. The resultant third harmonic beam **325** would have a vacuum wavelength of 355 nm

Three different wavelength beams, the fundamental **209''**, the remaining second harmonic **323'**, and the third harmonic **325** emerge from the output face **306** of the TH crystal **302**. For clarity in FIG. 1 the beams are shown as spatially displaced lines, but in practice the beams have a finite spatial extent and may be spatially overlapped.

While FIG. 1 displays a basic third harmonic generation system many possible variations exists. For example, the SH and TH crystals may be fabricated as parallelepipeds or prisms. In addition, the beams may be incident on the entrance and exit crystal surfaces at oblique angles. Alternative types of focusing elements, for example curved mirrors may be used in place of lenses to focus the beams.

Many factors impact the third harmonic beam shape and conversion efficiency. These factors include, but are not limited to:

> i) Fundamental beam transverse modal properties
> ii) Fundamental beam peak power
> iii) Fundamental beam spectral width
> iv) Focusing conditions into the SHG crystal
> v) Focusing conditions into the THG crystal
> vi) Input and output angles of the SHG crystal
> vii) Input and output angle of the THG crystal
> viii) Length of the SHG crystal
> ix) Length of the THG crystal
> x) Poynting vector walkoff in the SHG
> xi) Poynting vector walkoff in the THG

In general there is a tradeoff between efficient conversion efficiency and generating a round third harmonic beam. Efficient conversion requires high beam intensities mandating a tight beam focus and long SHG and THG crystals. The tight focus and long crystals exacerbate the effects of Poynting vector walkoff, elongating and deforming the beams in the walkoff direction.

Also at conversion efficiencies above approximately 30% pump depletion may distort the beam shape and limit the conversion efficiency.

Regions of high intensity convert a greater fraction of the power into harmonics than regions of low intensity. Furthermore the tight focus in the crystals produces high intensities at the crystal faces, which increases the likelihood of catastrophic optical damage at these surfaces. This is particularly a problem on the output face of the THG crystal since this surface is exposed to a high intensity third harmonic beam.

The present disclosure describes an innovative optical harmonic generator system that simultaneously produces high single-pass conversion efficiency and a round, near-diffraction limited output beam over a wide range of operating conditions with a minimum of optical components.

Aspects of the present disclosure are particularly suited for use with a seeded, fiber amplifier source as described in U.S. Patent 7,443,903, U.S. Patent 7,529,281, U.S. Patent 7,469,081, and U.S. Patent 8,009,705.

## Optical Harmonic Generator

FIG. 2A schematically illustrates the lay of an optical harmonic generator **200** in accordance with aspects of the present disclosure. A focusing lens focuses the input fundamental radiation into an input fundamental beam **209** that is round, near diffraction limited, with $M^2 < 1.2$ and minimal astigmatism. For example, the astigmatism maybe less than 10%. The input fundamental beam **209** is focused on to an SHG crystal **202** by fundamental focusing lens **203**. The SHG crystal **202** is fabricated and oriented for phasematching the fundamental to the second harmonic of the fundamental radiation. An input face **204** of the SHG crystal **202** is oriented so that the input fundamental beam **209** is incident on this face at an oblique angle of incidence $\theta_i$ so as to expand the beam size in one axis. The ratio of expansion (R) is given by the expression $R = \cos\theta_i / \cos\theta_t$, where $\theta_t$ refers to the transmitted angle. As is conventional, these angles are measured with respect to a direction normal (i.e., perpendicular) to the input face **204** of the SHG crystal **202**. These angles are related by Snell's law as $n_i \sin\theta_i = n_t \sin\theta_t$, wherein $n_i$ is the refractive index of the incident medium (e.g., $n_i$ is equal to 1 for vacuum and approximately equal to 1 for air) and $n_t$ is the refractive index for the SHG crystal **202**.

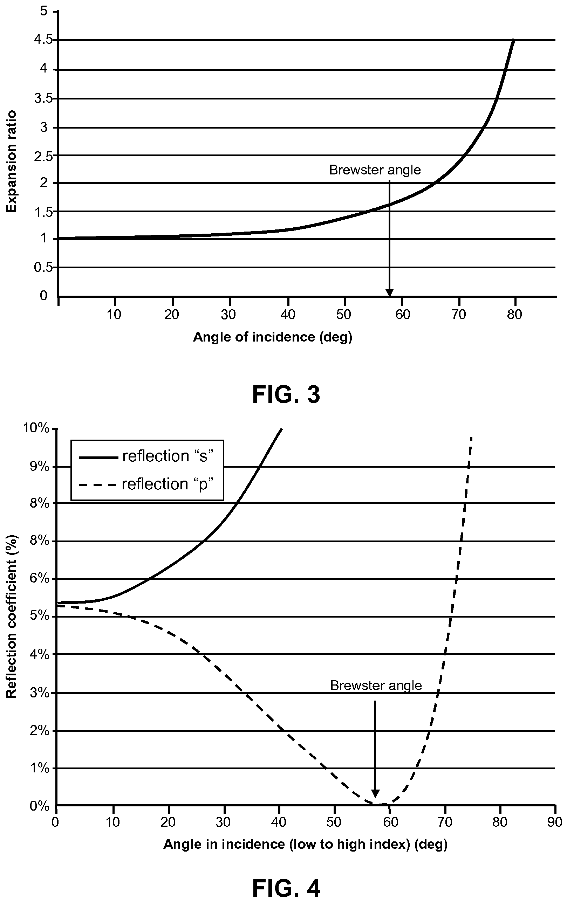

The graph shown in FIG. 3 plots the expansion ratio R as a function of the angle of incidence $\theta_i$ for a material with a refractive index $n_t$ of 1.6, which is approximately the refractive index for LBO. The angle of incidence $\theta_i$ may be chosen so that it is at or near Brewster angle $\theta_B = \arctan(n_t/n_i)$. By way of example, and not by way of limitation, the input face of the SHG crystal is oriented such that it is within about 5 degrees of the Brewster angle with respect to the input fundamental beam **209,** (i.e., $\theta_i$ is within about 5 degrees of the Brewster angle for the SHG crystal). As is well known to those of skill in the art, when light is incident on an interface at Brewster's angle $\theta_i$ light reflected from the interface is s polarized (i.e., polarized in a direction perpendicular to the plane of incidence). This minimizes reflection losses for "p" polarized incident light (i.e., light polarized parallel to the plane of incidence) for an uncoated surface as shown in the graph depicted in FIG. 4. If angle of incidence $\theta_i$ is chosen as Brewster's angle then the expansion ratio R is simply the SHG crystal refractive index, e.g., approximately 1.6 for LBO.

The orientation of the input face **204** of the SHG crystal **202** is chosen such that the direction of the expansion of the beam at the input face **202** is oriented along a non-walkoff direction in the SHG crystal **202.**

The astigmatism introduced in the fundamental beam by the asymmetric beam expansion may be easily controlled by the positioning of the SHG crystal **202** relative to the fundamental beam focus. For example, if the input face **204** is placed exactly at the waist, the expansion introduces no astigmatism. Alternatively, if the waist is shifted into the SHG crystal **202** the introduced astigmatism will increase monotonically with the waist in the expanded direction located farther from the input face than the waist in the unexpanded direction. Placing the waist before the SHG crystal **202** will introduce astigmatism with the opposite sense, i.e., the introduced astigmatism will increase monotonically with the waist in the unexpanded direction located farther from the input face than the waist in the expanded direction.

An important point is that the fundamental beam astigmatism may be readily controlled by the simple adjustment of the location of the fundamental beam waist with respect to the SHG crystal input face **204.** The adjustment of the beam waist has little impact on the expansion ratio. The expansion ratio is primarily controlled by the angle of incidence $\theta_i$ of the input fundamental beam **209** on the SHG crystal input face **204.** This angle can be controlled by crystal fabrication. By way of example, the angle may be controlled so that the typical beam waist size in the SHG crystal may be about 60 microns in the tight focus direction and about 100 microns in the walkoff direction. Typical expansion ratios are in the range from 1.5:1 to 2.5:1.

The residual fundamental beam **209'** and the second harmonic beam (not shown) leave the SHG crystal **202** at an output face **206.** This face may be fabricated and aligned for nominal normal incidence. The exact angle of incidence is not important. The output face **206** may be oriented so that the beams are incident at an angle that may be several degrees off normal to reduce impact of back reflections. The output face **206** of the SHG crystal **202** may also be antireflection coated to reduce back reflections and maximize the output power. The coating may advantageously have low reflectance at both the emerging fundamental **209'** and the second harmonic beam.

The fundamental and second harmonic beams then pass through and may be focused by the relay lens **205** or some other optical focusing element (e.g., a focusing mirror). The focusing system may be advantageously designed so that beam waist profiles in second harmonic crystal are replicated, with some defined magnification, in the third harmonic generation (THG) crystal **302.** There are at least two possible methods to achieve this. One method uses a single relay lens **205** positioned such that it is in the far-field of the beam emerging from the second harmonic crystal. Far-field implies that distance is greater than about five times the Rayleigh length corresponding to the largest waist in the second harmonic crystal. For example if the largest fundamental beam waist size in the second harmonic crystal is 120 microns and the wavelength is 1064 nm, then the Rayleigh length is approximately 42.6 mm. Thus the waist to relay lens separation should be greater than approximately 200 mm. The magnification will be approximately the ratio of the distances on both sides of the lens given by l/f= l/$d_1$ + l/$d_2$, where f is the lens focal length, $d_1$ is the distance between the lens and waist in or near the second harmonic crystal, and $d_2$ is the distance between the lens and waist in or near the third harmonic crystal.

The second method, shown in FIG. 2B uses first and second lenses, **205A, 205B,** of focal length, $f_1$ and $f_2$, respectively. The first lens **205A** is positioned a distance approximately f from the waist in the second harmonic crystal. The second lens **205B** is positioned a distance approximately $f_1+f_2$ from the first lens **205A.** The waist produced by the second lens **205B** will be a distance $f_2$ from lens 2. The magnification will be approximately the ratio of $f_2/f_1$.

Some implementations may completely omit relay lenses between the SHG crystal **202** and the THG crystal **302** if the SHG crystal output face **206** is sufficiently close to the THG crystal input face **304.**

The focus of the second harmonic beam and the residual fundamental beam **209'** is in or near the THG crystal **302.** The front face **304** of the THG crystal **302** may be fabricated and aligned for nominal normal incidence. Again, the exact angle of incidence is not important. Furthermore the THG crystal **302** may be configured so that the beams may be several degrees off normal to reduce the impact of back reflections. The front face of the THG crystal **302** may be antireflection coated to reduce back reflections and to maximize the output power. Such a coating may advantageously have low reflectance at both the fundamental and the second harmonic wavelengths. The size of the focused fundamental spot is similar to the size of the focused fundamental spot in the SHG crystal **202.**

The THG crystal **302** is fabricated and oriented for phasematching the fundamental and second harmonic beams for third harmonic generation. The THG crystal **302** may also be oriented so that fundamental and second harmonic beams "walk-on" each other as they traverse the crystal as described by in U. S. patent number 5,835,513 to Pieterse. This maximizes overlap of the fundamental and second harmonic beams in the THG crystal **302** and thus maximizes the conversion efficiency.

The output face **306** of the THG crystal **302** is fabricated such that the beams **209", 325** are incident at an oblique angle of incidence. The angle of incidence may be chosen using the following five criteria:

(i) Reflection of the third harmonic is suitably low, e.g., less than 5%

(ii) Angular beam separation due to dispersion is sufficient such that third harmonic may be spatially filtered from fundamental and second harmonic beam. By way of example, and not by way of limitation, a typical criterion for filtering may be that the angular separation between the beams is at least twice the beam divergence.

(iii) The contraction the third harmonic beam experiences passing through the output face may create approximately equal waist sizes in the walkoff and non-walkoff directions.

(iv) The astigmatism introduced by the output face may be chosen to approximately cancel any previous beam astigmatism, such that the apparent waist positions of the exiting third harmonic beam are approximately equal in the walkoff and non-walkoff directions.

(v) The output face is preferably robust against optical damage and yield long lived operation.

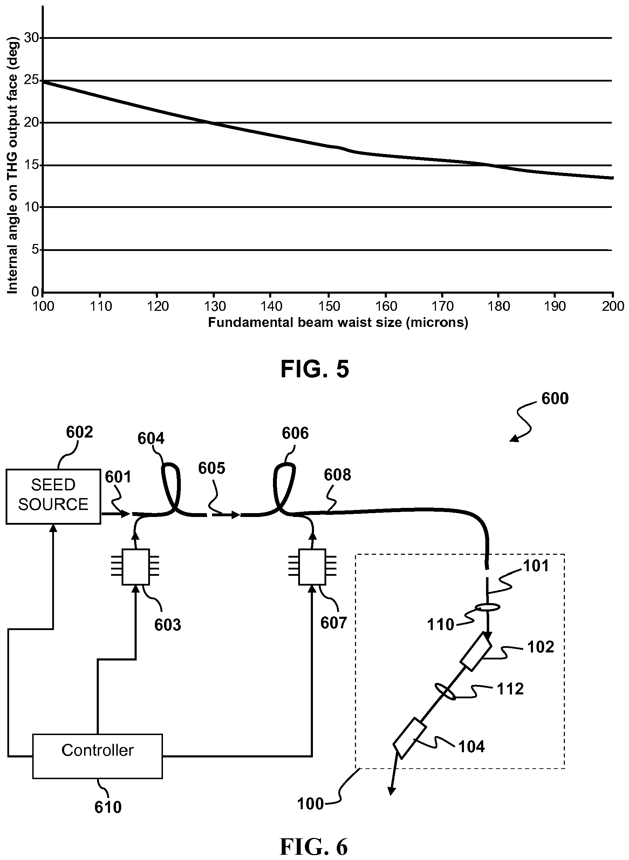

By way of example, and not by way of limitation, for a third harmonic generator optical layout using a LBO SHG crystal with an approximately Brewster angle input and a LBO THG crystal, the output face may be oriented such that the third harmonic beam angle of incidence is 20° satisfies the above five criteria. Specifically, for low reflection loss, the third harmonic beam may exit the crystal at an angle of transmission of approximately 33°. For an uncoated output face this gives an acceptable third harmonic reflectance of 3.1%. Sufficient angular separate may be achieved for an input fundamental wavelength of 1064.2 nm and an LBO temperature of 35° C; the refractive indices of the fundamental, second harmonic, and third harmonic beams are approximately 1.565, 1.613, and 1.597, respectively. Dispersion on the THG crystal output face may advantageously spatially separate the beams due to the difference in the transmitted angle for the different wavelengths. FIG. 5 plots the internal angle of incidence on the THG crystal output face versus the fundamental beam waist size in the THG crystal which results in the third harmonic beam separation from the second harmonic beam being at least equal to the half divergence of the two beams.

The third harmonic beam **325** emerging from the THG crystal **302** may have an optical power of greater than about 1 Watt, greater than about 10 Watts or greater than about 30 Watts.

To make the output face of the THG crystal **302** robust against optical damage the output face of the THG crystal maybe uncoated. As described in U.S. patent number 5,850,407 by William Grossman use of an uncoated output face provides a high damage threshold.

In summary a round, non-astigmatic, near diffraction limited third harmonic beam may be efficiently generated from a round non-astigmatic, near diffraction limited fundamental beam using an optical layout having the following:

i) a lens or other optical component that focuses the fundamental input beam into the SHG crystal;

ii) a Brewster or near-Brewster angled SHG input face;

iii) a Relay lens (or other optical component) between the SHG and THG crystals.

iv) Near 20° incidence of the SH and residual fundamental beams at the THG output face

The foregoing optical layout has the following advantages.

(1) It allows small beam sizes in nonlinear crystals to provide optimal efficiency.
(2) It does not require special lenses or prisms for walkoff compensation.
(3) It provides an adjustment "knob" for astigmatism by adjusting position of first fundamental beam waist with respect to SHG crystal input face
(4) It provides an adjustment "knob" for roundness by adjusting relay lens and THG crystal locations.

In general, the SHG input face **204** may be at approximately Brewster angle or sufficiently close to Brewster angle so that the power loss is acceptable. For example, as may be seen from FIG. 4, the reflection loss for p-polarized light at the SHG **204** input face can be kept to about 2% or less if the angle of incidence at the SHG input face is between roughly $\theta_B$-20° and $\theta_B$+10°. FIG. 4 can also be used to estimate the reflection loss at the THG output face **306**. In such a case, the relevant angle would be the angle of refraction at the THG output face, i.e., the angle between the THG output beam **325** and the normal to the THG output face **306**.

To assist in understanding certain aspects of the present disclosure, four diagrams shown in FIG. 6 illustrate the change in shape of the beam at various locations in the optical harmonic generator **200.** In particular, in diagram 1, the fundamental beam **209** starts off round. Then in diagram 2 the fundamental beam is expanded in the non-walkoff direction at the input face **204** of the SHG crystal **202.** The expansion results in an elliptical beam cross-section that is oriented perpendicular to the walkoff direction in the SHG crystal **202.** The THG crystal **302** generates the third harmonic beam **325** with the shape shown in diagram 3. This shape is not as elliptical as the fundamental beam was in diagram 2, because it has been stretched in the walkoff direction. The third harmonic beam **325** then needs to be compressed in the non-walkoff direction, as shown in diagram 4, to get a round beam. The compression can take place at the output face of the THG crystal as discussed above. The reduction should be less than the expansion of the fundamental beam was, because the third harmonic beam **325** is less elliptical than the fundamental beam **209** was. Consequently, the expansion at the input face of the SHG crystal exceeds the subsequent reduction at the output face of the THG crystal **302.**

## Alternative Embodiments

A first alternative embodiment is to increase the angle of incidence on the SHG crystal **202** so that it is greater than Brewster angle. The input surface **204** of the SHG **202** may be coated to reduce any back reflections and improve efficiency. A round, non-astigmatic, near diffraction limited third harmonic may be obtained by using a THG crystal **302** fabricated so that its output face is oriented at or near Brewster angle.

In one alternative embodiment, a pair of prisms may be positioned anywhere in the beam prior to the SHG crystal **302** and their fabrication angles and alignment may be chosen to give the desired ellipticity and astigmatism in the SHG crystal **202.**

Another alternative embodiment is to use the optical design described herein for higher harmonic generation (HHG) other than third harmonic generation. For example 4th harmonic versions may be implemented. One version of such an embodiment, may use two nonlinear crystals. A first nonlinear crystal converts fundamental radiation to the second harmonic and a second nonlinear crystal converts the second harmonic to the fourth harmonic. For a fundamental wavelength at or near 1064 nm a LBO crystal may be used for the SHG crystal and a barium borate (BBO) crystal may be used for the FHG crystal.

A second version may use three nonlinear crystals to convert fundamental radiation to fourth harmonic radiation. Specifically, a first crystal may be used to convert some of the fundamental radiation to the second harmonic. A second crystal mixes the second harmonic with the residual fundamental to generate a third harmonic. A third crystal mixes the third harmonic with the residual fundamental to generate a fourth harmonic. For a fundamental wavelength at or near 1064 nm appropriately oriented LBO crystals may be used in all harmonic conversion stages.

In either the first or second version, all surfaces which transmit third or fourth harmonic beams may be uncoated and oriented at either Brewster angle or less-than Brewster angle for the harmonic beam.

Aspects of the present disclosure provide for simple adjustment of beam shape using a single cylindrical lens and the principles of Gaussian optics. The lens can be placed close to a nonlinear crystal thereby overcoming pre-existing space constraints in certain optical systems without having to re-design major hardware components.

Advantages of the proposed system include high conversion efficiency to the third harmonic and a round output beam. Such a system can work with both LBO and BBO nonlinear crystals. The system is characterized by a high damage threshold for third harmonic crystal. In addition, the system utilizes no UV beam shaping optics and no coatings on any surface transmitting UV leading to high reliability and long lived system.

The third harmonic beam is easily separated from the fundamental and second harmonic beams by dispersion at the third harmonic generator crystal output face. This system can provide design-adjustable beam roundness and alignment-adjustable astigmatism. The system requires minimal optical components and minimal or no cylindrical optics or prisms.

## Laser System

FIG. 6 depicts an example of a wavelength-converted laser system **600** according to an embodiment of the present invention. Specifically, the system **600** generally includes a seed source **602,** one or more optical amplifiers **604, 606,** and a wavelength converter **100,** which may be configured as described herein with respect to FIG. 2A, FIG. 2B, or any of the other configurations described above. The seed source **602** generates seed radiation **601,** which is amplified by the optical amplifiers **604, 606** to produce an amplified output that serves as fundamental input radiation **101** for the wavelength converter. The wavelength converter **100** wavelength converts at least a portion of the amplified output to produce a wavelength converted output. A portion of the fundamental input beam may also emerge from the wavelength converter **100.**

There are a number of different possible designs for the seed source **602.** For example, the seed source **602** may be a diode laser pumped by driving electric current through the diode. Various types of laser diodes, such as a distributed Bragg reflector (DBR) laser, distributed feedback (DFB), or Fabry-Perot laser diode may be used. An example of a commercially available DBR is a model DBR-1064-100 from Sacher Lasertechnik Group of Marburg, Germany. Alternatively, the seed source **602** may be a diode-pumped solid state (DPSS) laser, which may be passively Q-switched, mode-locked or run continuous wave (CW) or quasi-CW. Other types of lasers may alternatively be used as the seed source **602.**

The optical amplifiers may include one or more amplifier units **604, 606.** For example, an optional pre-amplifier **604** can be optically coupled in series between the seed source **602** and a power amplifier **606.** The pre-amplifier **604** may amplify the seed radiation **602** thereby producing an intermediate signal **605,** which is amplified by the power amplifier **606** to produce the amplified output that forms the fundamental input beam **101.** The amplifiers **604, 606** are optically coupled to an output fiber **608.** The fundamental input beam **101** emerges from an end face of the fiber **608.**

By way of example, one or more of the amplifiers **604, 606** may be fiber amplifiers that include optical fibers coupled to pumping sources **603, 607.** The optical fibers may generally include a cladding and a doped core. The core of the fiber maybe, e.g., about 6 microns in diameter. The fiber may be a polarization maintaining or single polarization fiber. A portion of one of the amplifiers **606** may form the output fiber **608.** Input radiation that is to be amplified (e.g., seed radiation **601** or intermediate radiation **605**) is coupled to the core. Pumping radiation from the pumping sources **603, 607** (e.g., diode lasers) is also typically coupled to the core, but may alternatively be coupled to the cladding. Dopant atoms, e.g., rare earth elements such as ytterbium (Yb), erbium (Er), neodymium (Nd), holmium (Ho) samarium (Sm) and thulium (Tm), or combinations of two or more of these, in the core of the fiber absorb energy from the pumping radiation. The absorbed energy amplifies the energy of the input radiation in the core of the fiber. The input radiation stimulates emission of radiation from the dopant atoms. The stimulated radiation has the same frequency and phase as the input radiation. The result is an amplified output having the same frequency and phase as the input radiation but a greater optical intensity.

A controller **610** may be operably coupled to the seed source **602** and/or pump sources **603, 607.** The controller **610** may implement hardware or software logic adapted to control the power of the seed radiation **601** or pump radiation provided by the pump sources **603, 607.** By controlling the power of the seed radiation **601** from the seed source and/or the pump radiation from the pump sources **603** and **607,** the controller **610** controls the optical power of the input beam **101** provided to the wavelength converter **100.**

The wavelength converter **100** may include first and second non-linear optical crystals **102, 104,** and lenses **110, 112,** which may be configured as described above. By way of example, and not by way of limitation, the first non-linear crystal **102** may be a SHG crystal that produces a second harmonic beam output from a non-linear interaction between the crystal **102** and the input fundamental radiation **101.**

The THG crystal produces third harmonic radiation through a sum-frequency interaction between the SHG output beam from the SHG crystal **102** and a residual fundamental beam from the SHG crystal. The third harmonic radiation emerges from the THG crystal as the wavelength converted output **111.** Some leftover input radiation **101'** may also emerge from the second crystal **104.** The THG crystal may include a Brewster-cut end face **106** that separates the wavelength converted output **111** from residual fundamental radiation that emerges from the second crystal.

## Claims

1. An extra cavity harmonic generator system configured to produce a round, non-astigmatic third harmonic output beam (325) from a nominally round, non-astigmatic, diffraction limited input fundamental beam (209), the system comprising:

   a second harmonic generation (SHG) crystal (202) having an input face (204) oriented at an angle of incidence within about 5 degrees of Brewster angle with respect to the input fundamental beam (209) wherein the fundamental beam (209) size is expanded in a non-walkoff direction for the SHG crystal (202) at the input face (204), the SHG crystal (202) being configured to generate a second harmonic beam (209') from the input fundamental beam (209); a third harmonic generation (THG) crystal (302) having an output face (206) oriented at an oblique angle of incidence in a non-walkoff direction for the THG crystal (302) such that the third harmonic beam size (325) is contracted in this direction, the THG crystal (302) being configured to generate a third harmonic beam from the second harmonic beam and a residual fundamental beam from the SHG crystal (202); wherein an expansion of the input fundamental beam at the input face of the SHG crystal (202) exceeds a reduction of a third harmonic beam (325) at the output face (206) of the THG crystal (302) and the angle of incidence of the input face and angle of incidence of the fundamental and second harmonic beams (209, 209') at the output face (206) of the THG crystal (302) are selected to optimize net efficiency of conversion of the fundamental beam to third harmonic radiation and roundness of the harmonic beam.

2. The system of claim 1, wherein the input face of the SHG crystal is oriented an oblique angle of incidence with respect to the fundamental input beam to expand the fundamental beam in the non-walkoff direction of the SHG crystal at the input face.

3. The system of claim 1, wherein the output face of the THG crystal is oriented at less than a Brewster angle with respect to the third harmonic beam.

4. The system of claim 1, wherein the third harmonic beam is angularly separated from the fundamental and second harmonic beams by an angle greater than an angular divergence of the beams.

5. The system of claim 1, wherein an average power of the third harmonic beam is greater than about 30W.

6. The system of claim 1, wherein the output face of the THG crystal is oriented at a near-20 degree incident angle with respect to the residual fundamental and second harmonic beams where the residual fundamental and second harmonic beams are incident at the output face of the THG crystal.

7. An extra cavity harmonic generator system configured to produce a round, non-astigmatic third harmonic output beam from a nominally round, non-astigmatic, diffraction limited input fundamental beam, the system comprising:

   a second harmonic generation (SHG) crystal having an input face oriented at an angle of incidence within about 5 degrees of Brewster angle with respect to the input fundamental beam wherein the fundamental beam size is expanded in a non-walkoff direction for the SHG crystal at the input face, the SHG crystal being configured to generate a second harmonic beam from the input fundamental beam;
   one or more higher harmonic generation (HHG) crystals having an output face oriented at an oblique angle of incidence in a non-walkoff direction for at least one of the HHG crystals such that an output higher harmonic beam size is contracted in this direction, the one or more HHG crystals being configured to generate a higher harmonic beam from the second harmonic beam and a residual fundamental beam from the SHG crystal;
   wherein an expansion of the input fundamental beam at the input face of the SHG crystal exceeds a reduction of a third harmonic beam at the output face of at least one of the one or more HHG crystals and the angle of incidence of the input face and angle of incidence of the fundamental and second harmonic beams at the output face of the THG crystal are selected to optimize net efficiency of conversion of the fundamental beam to third harmonic radiation and roundness of the harmonic beam.

8. The system of claim 7, wherein the one or more HHG crystals include a THG crystal configured to generate a third harmonic beam from the second harmonic beam and a first residual fundamental beam from the SHG crystal and a fourth (FHG) harmonic generation crystal configured to generate a fourth harmonic beam from the third harmonic beam and a second residual fundamental beam from the THG crystal.

9. The system of claim 7, wherein the one or more HHG crystals include a nonlinear crystal configured to generate a fourth harmonic beam from the second harmonic beam.

**Patentansprüche**

1. Ein extern zum Hohlraum basierendes Harmonischengeneratorsystem, das dafür konfiguriert ist, aus einem nominell runden nicht-astigmatischen beugungsbegrenzten Eingangsgrundschwingungs-Strahlenbündel (209) ein rundes nicht-astigmatisches Ausgangsstrahlenbündel (325) der dritten Harmonischen zu erzeugen, wobei das System umfasst:

   einen Kristall (202) zur Erzeugung der zweiten Harmonischen (SHG) mit einer Eingangsfläche (204), die in Bezug auf das Eingangsgrundschwingungs-Strahlenbündel (209) unter einem Einfallswinkel innerhalb von etwa 5 Grad des Brewster-Winkels orientiert ist, wobei die Größe des Grundschwingungs-Strahlenbündels (209) in einer Nicht-Ablenkrichtung für den SHG-Kristall (202) bei der Eingangsfläche (204) aufgeweitet ist, wobei der SHG-Kristall (202) dafür konfiguriert ist, aus dem Eingangsgrundschwingungs-Strahlenbündel (209) ein Strahlenbündel (209') der zweiten Harmonischen zu erzeugen;
   einen Kristall (302) zur Erzeugung der dritten Harmonischen (THG) mit einer Ausgangsfläche (206), die in einer Nicht-Ablenkrichtung für den THG-Kristall (302) unter einem schiefen Einfallswinkel orientiert ist, sodass die Größe (325) des Strahlenbündels der dritten Harmonischen in dieser Richtung zusammengezogen ist, wobei der THG-Kristall (302) dafür konfiguriert ist, aus dem Strahlenbündel der zweiten Harmonischen und aus einem Restgrundschwingungs-Strahlenbündel von dem SHG-Kristall (202) ein Strahlenbündel der dritten Harmonischen zu erzeugen;
   wobei eine Aufweitung des Eingangsgrundschwingungs-Strahlenbündels bei der Eingangsfläche des SHG-Kristalls (202) eine Verkleinerung eines Strahlenbündels (325) der dritten Harmonischen bei der Ausgangsfläche (206) des THG-Kristalls (302) übersteigt und wobei der Einfallswinkel der Eingangsfläche und der Einfallswinkel des Grundschwingungs-Strahlenbündels und des Strahlenbündels der zweiten Harmonischen (209, 209') bei der Ausgangsfläche (206) des THG-Kristalls (302) in der Weise gewählt sind, dass der Nettowirkungsgrad der Umwandlung des Grundschwingungs-Strahlenbündels in Strahlung der dritten Harmonischen und die Rundheit des Harmonischenstrahlenbündels optimiert sind.

2. System nach Anspruch 1, wobei die Eingangsfläche des SHG-Kristalls in Bezug auf das Grundschwingungs-Eingangsstrahlenbündel unter einem schiefen Einfallswinkel orientiert ist, um das Grundschwingungs-Strahlenbündel in der Nicht-Ablenkrichtung des SHG-Kristalls bei der Eingangsfläche aufzuweiten.

3. System nach Anspruch 1, wobei die Ausgangsfläche des THG-Kristalls in Bezug auf das Strahlenbündel der dritten Harmonischen unter einem kleineren als einem Brewster-Winkel orientiert ist.

4. System nach Anspruch 1, wobei das Strahlenbündel der dritten Harmonischen von dem Grundschwingungs-Strahlenbündel und von dem Strahlenbündel der zweiten Harmonischen durch einen größeren Winkel als eine Winkeldivergenz der Strahlenbündel winkelig getrennt ist.

5. System nach Anspruch 1, wobei eine Durchschnittsleistung des Strahlenbündels der dritten Harmonischen größer als etwa 30 W ist.

6. System nach Anspruch 1, wobei die Ausgangsfläche des THG-Kristalls in Bezug auf das Restgrundschwingungs-Strahlenbündel und das Strahlenbündel der zweiten Harmonischen unter einem Einfallswinkel von nahezu 20 Grad orientiert ist, wobei das Restgrundschwingungs-Strahlenbündel und das Strahlenbündel der zweiten Harmonischen bei der Ausgangsfläche des THG-Kristalls einfallen.

7. Ein extern zum Hohlraum basierendes Harmonischengeneratorsystem, das dafür konfiguriert ist, aus einem nominell runden nicht-astigmatischen beugungsbegrenzten Eingangsgrundschwingungs-Strahlenbündel ein rundes nicht-astigmatisches Ausgangsstrahlenbündel der dritten Harmonischen zu erzeugen, wobei das System umfasst:

einen Kristall zur Erzeugung der zweiten Harmonischen (SHG) mit einer Eingangsfläche, die in Bezug auf das Eingangsgrundschwingungs-Strahlenbündel unter einem Einfallswinkel innerhalb von etwa 5 Grad des Brewster-Winkels orientiert ist, wobei die Größe des Grundschwingungs-Strahlenbündels in einer Nicht-Ablenkrichtung für den SHG-Kristall bei der Eingangsfläche aufgeweitet ist, wobei der SHG-Kristall dafür konfiguriert ist, aus dem Eingangsgrundschwingungs-Strahlenbündel ein Strahlenbündel der zweiten Harmonischen zu erzeugen; einen oder mehrere Kristalle zur Erzeugung einer höheren Harmonischen (HHG) mit einer Ausgangsfläche, die in einer Nicht-Ablenkrichtung für wenigstens einen der HHG-Kristalle unter einem schiefen Einfallswinkel orientiert ist, sodass eine Größe des Ausgangsstrahlenbündels einer höheren Harmonischen in dieser Richtung zusammengezogen ist, wobei der eine oder die mehreren HHG-Kristalle dafür konfiguriert sind, aus dem Strahlenbündel der zweiten Harmonischen und aus einem Restgrundschwingungs-Strahlenbündel von dem SHG-Kristall ein Strahlenbündel einer höheren Harmonischen zu erzeugen; wobei eine Aufweitung des Eingangsgrundschwingungs-Strahlenbündels bei der Eingangsfläche des SHG-Kristalls eine Verkleinerung eines Strahlenbündels der dritten Harmonischen bei der Ausgangsfläche wenigstens eines des einen oder der mehreren HHG-Kristalle übersteigt und

wobei der Einfallswinkel der Eingangsfläche und der Einfallswinkel des Grundschwingungs-Strahlenbündels und des Strahlenbündels der zweiten Harmonischen bei der Ausgangsfläche des THG-Kristalls in der Weise gewählt sind, dass der Nettowirkungsgrad der Umwandlung des Grundschwingungs-Strahlenbündels in Strahlung der dritten Harmonischen und die Rundheit des Harmonischenstrahlenbündels optimiert sind.

8. System nach Anspruch 7, wobei der eine oder die mehreren HHG-Kristalle einen THG-Kristall, der dafür konfiguriert ist, aus dem Strahlenbündel der zweiten Harmonischen und aus einem ersten Restgrundschwingungs-Strahlenbündel von dem SHG-Kristall ein Strahlenbündel der dritten Harmonischen zu erzeugen, und einen Kristall zur Erzeugung der vierten Harmonischen (FHG), um aus dem Strahlenbündel der dritten Harmonischen und aus einem zweiten Restgrundschwingungs-Strahlenbündel von dem THG-Kristall ein Strahlenbündel der vierten Harmonischen zu erzeugen, enthalten.

9. System nach Anspruch 7, wobei der eine oder die mehreren HHG-Kristalle einen nichtlinearen Kristall enthalten, der dafür konfiguriert ist, aus dem Strahlenbündel der zweiten Harmonischen ein Strahlenbündel der vierten Harmonischen zu erzeugen.

**Revendications**

1. Un système de génération d'harmonique avec cavité supplémentaire, configuré pour produire un faisceau de sortie (325) de troisième harmonique, non-astigmatique, rond, à partir d'un faisceau fondamental (209) d'entrée, limité par diffraction, non-astigmatique, nominalement rond, le système comprenant :

un cristal (202) de génération de seconde harmonique (SHG), ayant une face d'entrée (204) orientée selon un angle d'incidence à environ 5 degrés de l'angle de Brewster par rapport au faisceau fondamental (209) d'entrée, la taille du faisceau fondamental (209) étant étendue dans une direction sans décalage spatial pour le cristal SHG (202) au niveau de la face d'entrée (204), le cristal SHG (202) étant configuré pour générer un faisceau de seconde harmonique (209') à partir du faisceau fondamental (209) d'entrée ;
un cristal (302) de génération de troisième harmonique (THG), ayant une face de sortie (206) orientée selon un angle d'incidence oblique dans une direction sans décalage spatial pour le cristal THG (302) de façon à ce que la taille du faisceau de troisième harmonique (325) soit contractée dans cette direction, le cristal THG (302) étant configuré pour générer un faisceau de troisième harmonique à partir du faisceau de seconde harmonique et un faisceau fondamental résiduel à partir du cristal SHG (202) ;

une expansion du faisceau fondamental d'entrée au niveau de la face d'entrée du cristal SHG (202) excédant une réduction d'un faisceau de troisième harmonique (325) au niveau de la face de sortie (206) du cristal THG (302) et l'angle d'incidence de la face d'entrée et l'angle d'incidence du faisceau fondamental et du faisceau de troisième harmonique (209, 209') au niveau de la face de sortie (206) du cristal THG (302) étant sélectionnés pour optimiser l'efficacité nette de la conversion du faisceau fondamental en rayonnement de troisième harmonique et circularité du faisceau d'harmonique.

2. Le système conformément à la revendication n°1, la face d'entrée du cristal SHG étant orientée selon un angle d'incidence oblique par rapport au faisceau d'entrée fondamental pour étendre le faisceau fondamental dans la direction sans décalage spatial du cristal SHG au niveau de la face d'entrée.

3. Le système conformément à la revendication n°1, la face de sortie du cristal THG étant orientée à moins d'un angle de Brewster par rapport au faisceau de troisième harmonique.

4. Le système conformément à la revendication n°1, le faisceau de troisième harmonique étant angulairement séparé du faisceau fondamental et du faisceau de seconde harmonique par un angle plus grand qu'une divergence angulaire des faisceaux.

5. Le système conformément à la revendication n°1, une puissance moyenne du faisceau de troisième harmonique étant supérieure à environ 30 W.

6. Le système conformément à la revendication n°1, la face de sortie du cristal THG étant orientée selon un angle d'incidence de quasiment 20 degrés par rapport au faisceau fondamental résiduel et au faisceau de seconde harmonique où le faisceau fondamental résiduel et le faisceau de seconde harmonique sont incidents au niveau de la face de sortie du cristal THG.

7. Un système de génération d'harmonique avec cavité supplémentaire, configuré pour produire un faisceau de sortie de troisième harmonique, non-astigmatique, rond, à partir d'un faisceau fondamental d'entrée, limité par diffraction, non-astigmatique, nominalement rond, le système comprenant :

un cristal de génération de seconde harmonique (SHG), ayant une face d'entrée orientée selon un angle d'incidence à environ 5 degrés de l'angle de Brewster par rapport au faisceau fondamental d'entrée, la taille du faisceau fondamental étant étendue dans une direction sans décalage spatial pour le cristal SHG au niveau de la face d'entrée, le cristal SHG étant configuré pour générer un faisceau de seconde harmonique à partir du faisceau fondamental d'entrée ;
un ou plusieurs cristaux de génération d'harmonique plus élevé (HHG), ayant une face de sortie orientée selon un angle d'incidence oblique dans une direction sans décalage spécial pour au moins un des cristaux HHG de façon à ce que la taille d'un faisceau d'harmonique plus élevé de sortie soit contractée dans cette direction, le cristal ou les cristaux HHG étant configurés pour générer un faisceau d'harmonique plus élevé à partir du faisceau de seconde harmonique et un faisceau fondamental résiduel à partir du cristal SHG ;

une expansion du faisceau fondamental d'entrée au niveau de la face d'entrée du cristal SHG excédant une réduction d'un faisceau de troisième harmonique au niveau de la face de sortie au moins d'un du ou des cristaux HHG et l'angle d'incidence de la face d'entrée et l'angle d'incidence du faisceau fondamental et du faisceau de seconde harmonique au niveau de la face de sortie du cristal THG (302) étant sélectionnés pour optimiser l'efficacité nette de la conversion du faisceau fondamental en rayonnement de troisième harmonique et circularité du faisceau d'harmonique.

8. Le système conformément à la revendication n°7, le cristal ou les cristaux HHG comprenant un cristal THG configuré pour générer un faisceau de troisième harmonique à partir du faisceau de seconde harmonique et un premier faisceau fondamental résiduel à partir du cristal SHG ainsi qu'un cristal de génération de quatrième harmonique (FHG) configuré pour générer un faisceau de quatrième harmonique à partir du faisceau de troisième harmonique et un second faisceau fondamental résiduel à partir du cristal THG.

9. Le système conformément à la revendication n°7, le cristal ou les cristaux HHG comprenant un cristal non-linéaire configuré pour générer un faisceau de quatrième harmonique à partir du faisceau de seconde harmonique.

**FIG. 1**

(prior art)

**FIG. 2A**

**FIG. 2B**

**FIG. 3**

**FIG. 4**

**FIG. 5**

**FIG. 6**

Walkoff
direction

**209**

1. Fundamental beam
   before SHG crystal.

**209**

2. Fundamental beam
   inside SHG crystal.

**325**

3. Third harmonic beam inside
   THG crystal. (Less elliptical
   than (2.) because it's been
   stretched in the walkoff
   direction.)

**325**

4. Third harmonic beam after it
   exits the THG crystal.

**FIG. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5850407 A, William Grossman
- US 7016389 B
- US 7170911 B
- US 2011243163 A1
- US 7443903 B
- US 7529281 B
- US 7469081 B
- US 8009705 B
- US 5835513 A